(19) Europäisches Patentamt / European Patent Office / Office européen des brevets

(11) **EP 1 849 692 B1**

(12) **EUROPEAN PATENT SPECIFICATION**

(45) Date of publication and mention
of the grant of the patent:
**07.04.2010 Bulletin 2010/14**

(51) Int Cl.:
*B62J 6/02* *(2006.01)*          *B62J 6/04* *(2006.01)*
*B62J 6/06* *(2006.01)*

(21) Application number: **07250825.2**

(22) Date of filing: **28.02.2007**

(54) **Bicycle lighting system**

Fahrradbeleuchtungssystem

Système d'éclairage de bicyclette

(84) Designated Contracting States:
**DE IT NL**

(30) Priority: **28.04.2006   JP 2006126227**

(43) Date of publication of application:
**31.10.2007   Bulletin 2007/44**

(73) Proprietor: **SHIMANO INC.**
**Osaka 590-8577 (JP)**

(72) Inventors:
• **Kitamura, Satoshi**
  **Sakai City,**
  **Osaka 590-8577 (JP)**
• **Nagae, Masayoshi**
  **Sakai City,**
  **Osaka 590-8577 (JP)**

(74) Representative: **Murnane, Graham John**
**Murgitroyd & Company**
**165-169 Scotland Street**
**Glasgow**
**G5 8PL (GB)**

(56) References cited:
**WO-A-02/36420     US-A1- 2005 243 545**

## Description

The present invention relates to a lighting system, particularly a bicycle lighting system that uses electricity generated by a bicycle dynamo.

Bicycles have electrical devices such as a front lamp or tail lamp attached as lighting apparatuses. Conventionally, most front lamps are lit by electricity from a dynamo. Generally, the output voltage from a dynamo increases in proportion to the bicycle's speed (wheel rotation), in some cases, at high speed, output voltage between the dynamo terminals exceeds 100 V with the lighting apparatus switched off. Consequently, an electrical device with specifications to withstand such a high voltage is necessary to turn on the lighting apparatus with output voltage from the dynamo. However, parts that withstand high voltage are lacking in general versatility and are expensive.

Recently, electrical devices such as electric transmission systems have been attached to bicycles, and some are known to use electricity from a dynamo as an electric source for the electrical device. To use electricity from a dynamo, an electrical device such as this must also withstand high voltage.

Furthermore, to operate each electrical device, in the case of an electric transmission system, for example, most electricity is used at the moment of a change in speed, so electricity generated by the dynamo at that moment is consequently insufficient, and thus, operation of the electric transmission system sometimes becomes unstable. Therefore, to stabilize operation, some electrical devices are provided with a storage element as an electrical device for storing electricity from the dynamo for future use.

To be able to use each electrical device while the bicycle is stopped, some are provided with a storage element as an electrical device for storing electricity from a dynamo, for example such as disclosed in Japanese Unexamined Patent Application Publication H2003-11879.

The preamble of claim 1 is based on the teaching of document WO 02/36420. US 2005/0243545 discloses also a circuitry of a lighting device for bicycle having leds as light emitting devices.

Disclosure of the Invention

Problem to Be Solved

According to the said conventional configurations, to be able to use a general-purpose electrical device, each electrical device requires an apparatus for controlling voltage such as a protection circuit to clamp output voltage from the dynamo to a certain range or a voltage-adjusting circuit to adjust voltage to a certain value. In particular, to use a storage element, it is necessary to control the voltage applied to the storage element so as to protect the storage element.

The problem for the present invention to be solved is to simplify an apparatus for controlling voltage in a bicycle lighting system that uses a plurality of electrical devices.

Means for Solving the Problem

A bicycle lighting system according to a first aspect of the invention comprises a rectifying circuit, a lighting circuit and an operating section. The rectifying circuit is arranged to rectify electricity generated by a bicycle dynamo. The lighting circuit comprises a primary lighting circuit that is connected to said rectifying circuit and has at least one first light emitting diode that is arranged to always receive electricity outputted from said rectifying circuit. The operating section, which is connected in parallel with the lighting circuit for the bicycle dynamo, is operated by electricity from the dynamo.

According to this lighting system, when the bicycle moves so that the dynamo generates electricity, the electricity is rectified in a rectifying circuit and supplied to the first light emitting diode in the lighting circuit, which functions as a front lamp, for example. Since the first light emitting diode does not turn on until voltage increases to the forward voltage, when voltage increases to the forward voltage, the first light emitting diode turns on to be lit. When the first light emitting diode is turned on, even if output voltage begins to increase beyond the clamp voltage determined by the forward voltage in the number of diodes through which the current flows within the rectifying circuit and forward voltage in the first light emitting diode, the excessive current flows over via the first light emitting diode, and the output voltage that is clamped to the clamp voltage does not increase over the clamp voltage. Here, because voltage in the overall system is clamped to the first light emitting diode for lighting, it is not necessary to provide a voltage-controlling circuit for each operation. Consequently, in a bicycle lighting system, the apparatus for controlling voltage can be simplified.

Optionally, the operating section comprises a supplementary lighting circuit comprising a second light emitting diode for which the forward voltage is lower than that of the first light emitting diode. In this case, if voltage that flows into the second light emitting diode is lowered by resistance, etc., in advance, it is possible to turn on the second light emitting diode that can be used in a supplementary lighting circuit for which light intensity is lower than that of the front lamp, such as for a position light, for example, by clamp voltage through the first light emitting diode.

Optionally, the operating section controls the electric transmission apparatus in the bicycle. Optionally, the operating section comprises an electric transmission controlling system. Optionally, the electric transmission controlling system comprises a storage element such as a capacitor or condenser. Since the output voltage from the dynamo is maintained within the clamp voltage, a voltage-controlling circuit does not need to be provided in this electric transmission controlling system. Optionally, the electric transmission controlling system comprises a storage element for storing rectified electricity. In this case, voltage applied to the storage element can be maintained within a certain range by a simple configuration.

Optionally, the operating section comprises a tail lamp attached to the rear section of the bicycle, the tail lamp comprising a third light emitting diode for which the forward voltage is lower than that of the first light emitting diode. In this case, if voltage flowing into the third light emitting diode is lowered by resistance or the like, in advance, it is possible to turn on the third light emitting diode, which can be used for the tail light for which light intensity is lower than that of the front lamp, for example, by clamp voltage through the first light emitting diode.

Effect of the Invention

According to the present invention, because the overall voltage is clamped to the first light emitting diode for lighting, it is not necessary to provide a voltage-controlling circuit for each operation. Consequently, in a bicycle lighting system, the apparatus for controlling voltage can be simplified.

Brief Description of the Drawings

FIG. 1 shows a block diagram for illustrating the configuration of the bicycle lighting system in which one embodiment of the present invention is adopted;

FIG. 2 shows a circuit diagram for illustrating the configuration of the lighting circuit thereof; and

FIG. 3 shows a block diagram for illustrating the configuration of the electric transmission system.

Detailed Description of the Drawings

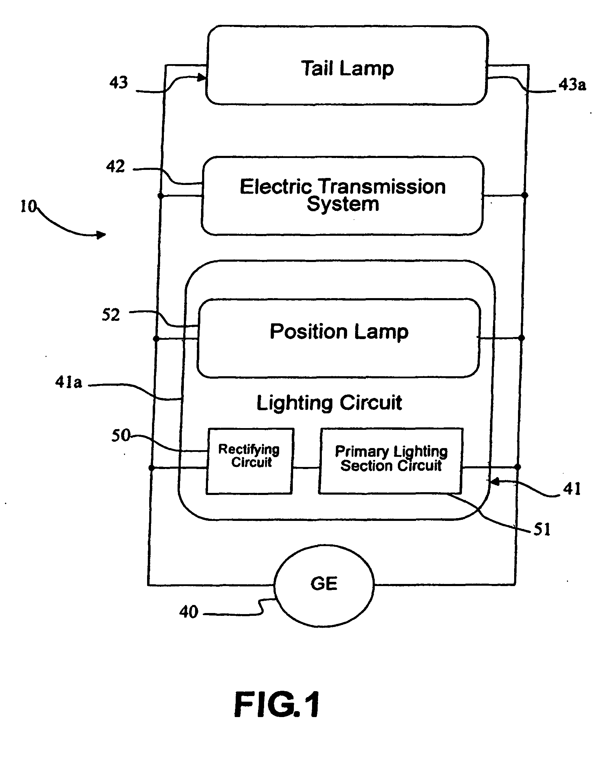

In FIG. 1, a bicycle lighting system 10 in which one embodiment of the present invention is adopted comprises a bicycle dynamo in the form of a hub dynamo 40 provided on the bicycle hub shaft, for example, a lighting circuit 41 that functions as a front lamp, an electric transmission system 42 that works as an operating section to be connected in parallel to the lighting circuit 41 for the hub dynamo 40, and a tail lamp 43 that works as the operating section. The hub dynamo 40 outputs AC based on bicycle travel, supplying electricity to the lighting circuit 41, electric transmission system 42, and tail lamp 43 on the bicycle.

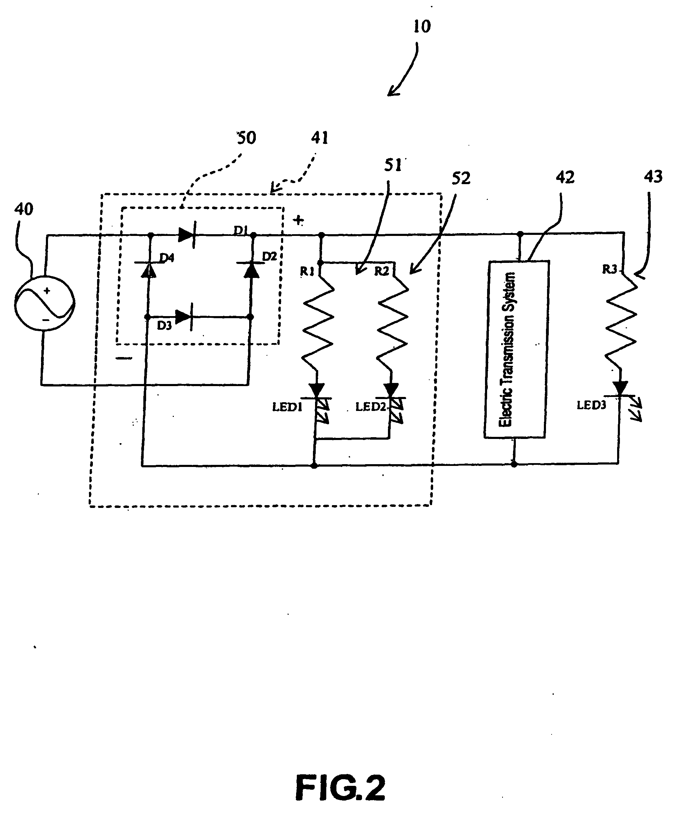

The lighting circuit 41 comprises a lamp case 41a that can be secured to a lamp stay provided at on the front fork of the bicycle, for example. The lamp case 41a contains, as illustrated in FIG. 1 and 2, a rectifying circuit 50 wherein AC output from the hub dynamo 40 undergoes full-wave rectification and the primary lighting circuit 51, which is to be a front lamp, using at least one first light emitting diode LED1 that is arranged to always receive electricity outputted from the rectifying circuit 50. Furthermore, the lamp case 41a contains a position lamp (one example of a supplementary lighting circuit) 52, which is the operating section.

Hence, in this embodiment, the operating section comprises the supplementary lighting circuit 52, the electric transmission system 42 and the tail lamp 43.

The rectifying circuit 50 comprises four diodes D1-D4 that are bridge-connected, having positive and negative terminals.

The primary lighting circuit 51 comprises resistance R1 for adjusting voltage and the current connected to the positive terminal in the rectifying circuit 50 and the first light emitting diode LED1 wherein the resistance R1 is connected to the anode. The cathode in the first light emitting diode LED1 is connected to the positive terminal in the rectifying circuit 50. The first light emitting diode LED1 is a power LED for radiating white light output at approximately 3 W, for example, and the forward voltage thereof is 3.5 V, for example. The first light emitting diode LED1 and rectifying circuit 50 enable output voltage from the hub dynamo 40 to be clamped to a clamp voltage Vc in the lighting system 10. In the clamp voltage Vc at this time, wherein the forward voltage of each diode D1-D4 is Vd, and the forward voltage of the first light emitting diode LED1 is Ved, the clamp voltage Vc is represented as follows:

$$Vc = (2 \times Vd) + Ved$$

Here, if the forward voltage of each diode D1-D4 is 0.6V, for example, the clamp voltage Vc will be 4.7V.

Consequently, in this lighting system 10, output voltage from the hub dynamo 40 is always within 4.7 V, which never increases beyond the clamp voltage Vc.

The position lamp 52 is connected in parallel to the primary lighting circuit 51. The position lamp 52 comprises resistance R2 for adjusting voltage and the current connected to the positive terminal in the rectifying circuit 50 and the second light emitting diode LED2 wherein the resistance R2 is connected to the anode. The cathode in the second light emitting diode LED2 is connected to the positive terminal in the rectifying circuit 50. The forward voltage of the second light emitting diode LED2 is lower than the forward voltage of the first light emitting diode LED1 (3.5 V, for example), approximately 2 V, for example. The second light emitting diode LED2 is a power LED for radiating white light output at approximately 0.01-1.0 W, for example. Resistance R2 is a larger resistance value than resistance R1, so clamp voltage is not lowered by the second semiconductor diode LED2 by arranging the forward voltage to be approximately 2 V.

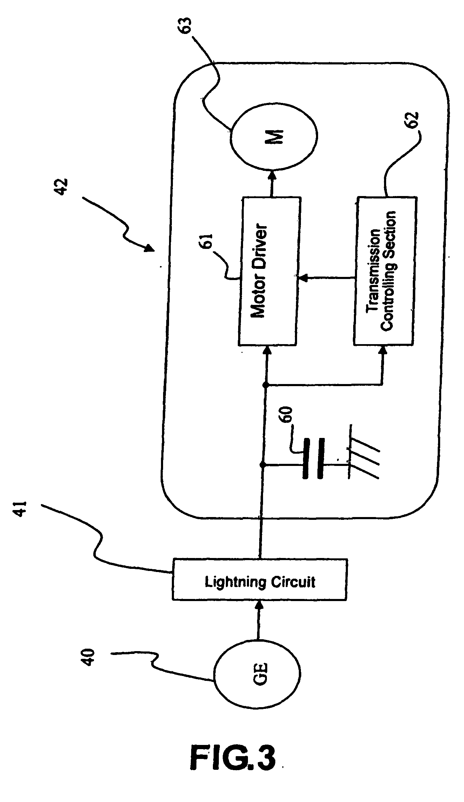

The electric transmission system 42, as illustrated in FIG. 3, comprises a storage element 60 consisting of a large-capacity capacitor (condenser) such as an electric bi-layer capacitor, for example, to control voltage fluctuation when stopped, a motor driver 61 operated by electricity from the storage element 60, a transmission controlling section 62 to control the motor driver 61, and a transmission motor 63 operated by the motor driver 61. The transmission controlling section 62 outputs a motor drive signal to the motor driver 61 with a transmission signal from the transmission switch provided in the handlebars of the bicycle, for example. In such an electric transmission system, conventionally, a voltage-controlling circuit such as a regulator is provided to maintain voltage on the input side of the apparatus. However, with the present embodiment, the first light emitting diode LED1, which is arranged to always receive electricity outputted from the rectifying circuit 50, or the rectifying circuit 50 clamps output voltage from the hub dynamo 40, thereby controlling it within the clamp voltage, and consequently, such a voltage-controlling circuit is not needed in the electric transmission system 42.

As illustrated in FIG. 2 and 3, the tail lamp 43 comprises a tail lamp case 43a that can be secured to the rear section of the bicycle. Furthermore, the tail lamp 43 comprises a resistance R3 for adjusting voltage and a current connected to the positive terminal in the rectifying circuit 50 contained in the tail lamp case 43a as well as a third light emitting diode LED3 wherein resistance R3 is connected to the anode. The third light emitting diode LED3 is a power LED for radiating red light output at approximately 0.01-1.0 W, for example. The forward voltage of the third light emitting diode LED3 is also approximately 2 V and lower than the first light emitting diode LED1.

In a lighting system 10 configured in this manner, if a current with an electric potential flows in excess of the forward voltage (2 V, for example) of the second and third light emitting diodes LED2, LED3 from the rectifying circuit 50, the position lamp 52 and tail lamp 43 will light up. However, the current does not flow into the first light emitting diode LED1 in the lighting circuit 41, so the first light emitting diode LED1 does not light up. Moreover, if a current with an electric potential flows in excess of the forward voltage of the first light emitting diode LED1 from the rectifying circuit 50, the first light emitting diode LED1 lights up as a headlamp in the primary lighting circuit 51 of lighting circuit 41. If the current flows into the first light emitting diode LED1, the current flows in lighting circuit 41, so output voltage from the hub dynamo 40 is clamped to the clamp voltage Vc while the first light emitting diode LED1 is on, because the first light emitting diode LED1 always receives electricity outputted from the rectifying circuit 50. Consequently, the output voltage from the hub dynamo 40 does not increase beyond the clamp voltage Vc at high speeds, so excessive voltage is not applied to the position lamp 52, electric transmission system 42, or tail lamp 43.

Here, because voltage in the overall lighting system 10 is clamped to the first light emitting diode LED1 for lighting, it is not necessary to provide a voltage-controlling circuit for each operating section. Consequently, in the bicycle lighting system 10, the apparatus for controlling voltage can be simplified.

Other Embodiments

Modifications and improvements can be incorporated without departing from the scope of the invention. For example:

(a) In the previous embodiment, the light emitting diode is used for the position lamp 52 or tail lamp 43 as the operating section, but an ordinary light bulb can be used; and

(b) In the previous embodiment, the position lamp 52, electric transmission system 42, and tail lamp 43 are illustrated as the operating section, but the operating section includes all electrical devices operated with electricity from the dynamo.

**Claims**

1. A bicycle lighting system (10) comprising:

a rectifying circuit (50) for rectifying electricity generated by a bicycle dynamo (40);
a lighting circuit (41) comprising a primary lighting circuit (51) connected to said rectifying circuit (50), said primary lighting circuit (51) having at least one first light emitting diode (LED1); and
an operating section connected in parallel with said lighting circuit (41), the operating section including an electrical device to be operated by electricity from the dynamo (40);
**characterised in that** the at least one first light emitting diode (LED1) is arranged to always receive electricity outputted from said rectifying circuit (50).

2. A bicycle lighting system (10) according to Claim 1, wherein said operating section comprises a supplementary lighting circuit (52) comprising a second light emitting diode (LED2), wherein the forward voltage of the second light emitting diode (LED2) is lower than that of said first light emitting diode (LED1).

3. A bicycle lighting system (10) according to Claims 1 or 2, wherein said operating section comprises an electric transmission controlling system (42) for controlling the bicycle electric transmission apparatus.

4. A bicycle lighting system (10) according to Claim 3, wherein said electric transmission system (42) comprises a storage element (60) for storing rectified electricity.

5. A bicycle lighting system (10) according to any one of Claims 1 to 4, wherein said operating section comprises a tail lamp (43) connected to the rear section of the bicycle, the tail lamp (43) comprising a third light emitting diode (LED3), the forward voltage of the third light emitting diode (LED3) being lower than that of said first light emitting diode (LED1).

**Patentansprüche**

1. Ein Fahrradbeleuchtungssystem (10), das Folgendes beinhaltet:

   eine Gleichrichterschaltung (50) zum Gleichrichten von durch einen Fahrraddynamo (40) erzeugter Elektrizität;
   eine Beleuchtungsschaltung (41), die eine primäre Beleuchtungsschaltung (51), die an die Gleichrichterschaltung (50) angeschlossen ist, beinhaltet, wobei die primäre Beleuchtungsschaltung (51) mindestens eine erste lichtemittierende Diode (LED1) aufweist; und
   einen Betriebsabschnitt, der zu der Beleuchtungsschaltung (41) parallel geschaltet ist, wobei der Betriebsabschnitt eine elektrische Vorrichtung, die durch Elektrizität aus dem Dynamo (40) betrieben werden soll, umfasst;
   **dadurch gekennzeichnet, dass** die mindestens eine erste lichtemittierende Diode (LED1) angeordnet ist, um stets aus der Gleichrichterschaltung (50) ausgegebene Elektrizität zu empfangen.

2. Fahrradbeleuchtungssystem (10) gemäß Anspruch 1, wobei der Betriebsabschnitt eine zusätzliche Beleuchtungsschaltung (52), die eine zweite lichtemittierende Diode (LED2) beinhaltet, beinhaltet, wobei die Durchlassspannung der zweiten lichtemittierenden Diode (LED2) niedriger ist als die der ersten lichtemittierenden Diode (LED1).

3. Fahrradbeleuchtungssystem (10) gemäß Anspruch 1 oder 2, wobei der Betriebsabschnitt ein elektrisches Übertragungssteuersystem (42) zum Steuern des elektrischen Übertragungsgeräts des Fahrrads beinhaltet.

4. Fahrradbeleuchtungssystem (10) gemäß Anspruch 3, wobei das elektrische Übertragungssystem (42) ein Speicherelement (60) zum Speichern gleichgerichteter Elektrizität beinhaltet.

5. Fahrradbeleuchtungssystem (10) gemäß einem der Ansprüche 1 bis 4, wobei der Betriebsabschnitt eine Rückleuchte (43), die an den hinteren Abschnitt des Fahrrads angeschlossen ist, beinhaltet, wobei die Rückleuchte (43) eine dritte lichtemittierende Diode (LED3) beinhaltet, wobei die Durchlassspannung der dritten lichtemittierenden Diode (LED3) niedriger ist als die der ersten lichtemittierenden Diode (LED1).

**Revendications**

1. Un système d'éclairage pour bicyclette (10) comprenant :

   un circuit redresseur (50) destiné à redresser de l'électricité générée par une dynamo de bicyclette (40) ;
   un circuit d'éclairage (41) comprenant un circuit d'éclairage primaire (51) connecté audit circuit redresseur (50), ledit circuit d'éclairage primaire (51) ayant au moins une première diode électroluminescente (DEL1) ; et
   une section d'actionnement connectée en parallèle audit circuit d'éclairage (41), la section d'actionnement incluant un dispositif électrique devant être actionné par de l'électricité provenant de la dynamo (40) ;
   **caractérisé en ce que** cette au moins une première diode électroluminescente (DEL1) est arrangée pour toujours recevoir de l'électricité sortie dudit circuit redresseur (50).

2. Un système d'éclairage pour bicyclette (10) selon la revendication 1, dans lequel ladite section d'actionnement comprend un circuit d'éclairage supplémentaire (52) comprenant une deuxième diode électroluminescente (DEL2), dans lequel la tension directe de la deuxième diode électroluminescente (DEL2) est inférieure à celle de ladite première diode électroluminescente (DEL1).

3. Un système d'éclairage pour bicyclette (10) selon la revendication 1 ou la revendication 2, dans lequel ladite section d'actionnement comprend un système de contrôle de transmission électrique (42) destiné à contrôler l'appareil de transmission électrique de bicyclette.

4. Un système d'éclairage pour bicyclette (10) selon la revendication 3, dans lequel ledit système de transmission électrique (42) comprend un élément de stockage (60) destiné à stocker de l'électricité redressée.

5. Un système d'éclairage pour bicyclette (10) selon n'importe laquelle des revendications 1 à 4, dans lequel ladite section d'actionnement comprend une lampe arrière (43) connectée à la section arrière de la bicyclette, la lampe arrière (43) comprenant une troisième diode électroluminescente (DEL3), la tension directe de la troisième diode électroluminescente (DEL3) étant inférieure à celle de ladite première diode électroluminescente (DEL1).

**FIG.1**

# FIG.2

FIG.3

**EP 1 849 692 B1**

**REFERENCES CITED IN THE DESCRIPTION**

**Patent documents cited in the description**

- JP H200311879 A
- WO 0236420 A
- US 20050243545 A